# EUROPEAN PATENT APPLICATION

(11) **EP 2 239 524 A2**
(43) Date of publication of application: **13.10.2010**
(21) Application number: 10157780.7
(22) Date of filing: 25.03.2010
(51) Int. Cl.: F24H 1/52

(54) **Heat Exchanger**

(30) Priority: 31.03.2009 GB 0905541
(71) Applicant: Solassistance Limited, Hundred House Hall Farm Weston Beccles Suffolk NR34 8TT (GB)
(72) Inventor: Seppings, Tom, Weston, Beccles Suffolk, NR34 8TT (GB)
(74) Representative: Willett, Christopher David

(57) **Abstract**

A heat exchanger (10) comprising pipework (14) suitable for heating water in a domestic hot water cylinder, which has a first elongate state to enable its passage through an opening in the cylinder and is moveable to a second folded state once inside the cylinder.

## Description

### Technical field

The invention relates to a heat exchanger suitable for heating water in a domestic hot water cylinder.

### Background to the invention

It is becoming increasingly common to have solar panels fitted to domestic dwellings to provide a "greener" form of water heating from this renewable source of energy. Once fitted, a solar powered heating system can be expected to provide from between 40% and 70% of the domestic hot water requirement for a single dwelling.

Most houses in the UK have a hot water boiler and a hot water cylinder with a heat exchange coil to transfer heat from the boiler to the water in the cylinder. To install a solar heating system an additional heat exchanger is required for the solar heating circuit. This is normally achieved by replacing the existing hot water cylinder with a larger twin coil cylinder. The replacement of the existing cylinder is costly and labour intensive, which can cause significant disruption in the household and result in high costs of installation. This inconvenience and cost deters potential customers from choosing to have a solar heating system installed.

Other sources of heat such as backboilers or biomass stoves and heat pumps also require means of transferring their heat to the hot water cylinder.

To address this problem, various solutions have been suggested which do not involve the replacement of the existing hot water cylinder. One solution suggested is to insert a heat exchanger into the hot water cylinder via the hot water outlet at the top of the cylinder. However this has the major disadvantages of having too low a heat exchange area typically required for solar heating, and also creates a restriction in the flow of hot water from the tank, thus reducing system performance.

Another proposed solution feeds water heated from the solar system to the cylinder via the existing hot water exit pipe and draws cold water from the existing cold water feed pipe. However, this system has the major disadvantage of not feeding heated water to the right location in the cylinder.

Other methods suggested involve inserting a heat exchanger through the immersion heater base, however, because of lack of space, these methods involve loss of the immersion heater during installation of the solar heat exchanger, which is a major disadvantage. Additionally, in order to achieve an acceptable surface area, such heat exchangers would need to be unacceptably long. A long heat exchanger prevents efficient placement within the cylinder and existing internal fittings and dimensions may further limit the maximum length possible.

### Summary of the invention

In a first aspect, the present invention relates to a heat exchanger comprising pipework suitable for heating water in a domestic hot water cylinder, which has a first elongate state to enable its passage through an opening in the cylinder and is moveable to a second folded state once inside the cylinder.

By having two states, a high capacity heat exchanger can be passed through a small opening which, once inserted, is moveable to a second folded state, reducing its length. This enables a high surface area heat exchanger with a short length enabling it to be positioned more effectively in the cylinder.

In a second aspect, the invention relates to a method of inserting a heat exchanger as defined herein through an opening in a domestic hot water cylinder in its elongate state and then, once inside the cylinder, inducing the heat exchanger to move to its folded state.

Preferably the heat exchanger is unstressed when in its elongate state and is stressed when in its folded state. It is thus generally biased towards its elongate state.

Preferably the pipework comprises at least a flexible portion in order that it may fold from the first state to the second state. The flexible portion may comprise substantially all of the heat exchanger heat transfer area.

A suitable material for the flexible portion is corrugated steel hose.

The heat exchanger typically comprises a means for moving the heat exchanger from the first to the second state. In a preferred embodiment this comprises a wire attached to the heat exchanger e.g. at it's leading end. Once inserted into a cylinder the wire can be pulled, causing the heat exchanger to fold to its second state.

By use of this invention, surface areas in excess of 0.2 m² may be achieved and yet can fit through an opening of 100 mm diameter and have a length (i.e. that distance from the opening in the cylinder to the furthest point of the heat exchanger) in its second state of no more than 50 cm. It is even possible to achieve in excess of 0.4 m². This is even possible through an opening of 80 mm or even 60 mm, and even 50mm.

It has been found that it is advantageous if the heat exchanger comprises a rigid portion forming part of the heat transfer area. In a preferred embodiment, the heat exchanger comprises a flexible portion foldable against a rigid portion. The flexible portion may conveniently be made from corrugated steel hose. Alternatively the heat exchanger may be substantially entirely flexible and can form an approximately circular arrangement in its folded state.

The heat exchanger may be foldable at more than one point and may comprise more than one means for moving the heat exchanger from the first state to the second state.

The heat exchanger is particularly suitable for use with a solar heating system, heat pump or biomass heater. It is preferably connected to a solar heating system arrangement.

The heat exchanger is particularly suitable for side entry openings, typically found in pressurised domestic hot water cylinders, as the width of the cylinder severely limits the maximum possible length.

The invention will now be illustrated by reference to the following figures in which:-
Figure 1 is an image of a heat exchanger according to the present invention attached to a fitting for a domestic hot water cylinder.
Figure 2 is an image of the heat exchanger shown in Figure 1 when fitted to a side opening in a pressurised domestic hot water cylinder.
Figure 3 is an image of another heat exchanger according to the present invention attached to a fitting for a domestic hot water cylinder.
Figure 4 is an image of the heat exchanger in Figure 3 when fitted to a side opening in a pressurised domestic hot water cylinder.

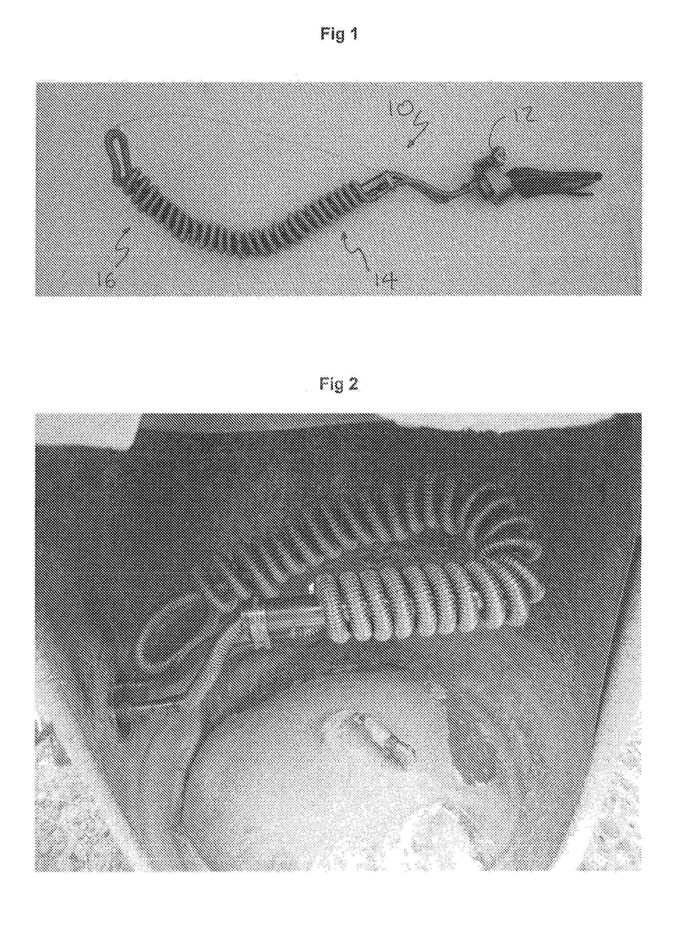

Turning to the figures, Figure 1 shows a heat exchanger 10 according to the invention attached to a fitting 12 designed to fit into a 2¼" BSP (British Standard Pipe, European equivalent Standard BS EN 10226:2004) opening in a domestic hot water cylinder. The heat exchanger 10 comprises a rigid pipework portion 14 connected to a flexible pipework portion 16. The heat exchanger is arranged with a central pipe surrounded by tightly coiled corrugated stainless steel hose. A wire 18 is connected to the end of heat exchanger 10 and passes through an opening in fitting 12.

In use, the heat exchanger is passed through an opening in the side of a domestic hot water cylinder and due to its elongate nature can pass through a very small opening. Once inside the cylinder fitting 12 is attached to the external of the cylinder, sealing the heat exchanger therein. Wire 18 is pulled causing the heat exchanger 10 to move from its first elongate state into a folded second state where the flexible region 16 is pressed against rigid section 14. The wire is locked at the fitting 12 with a grub screw (not shown) and the loose end of the wire is then cut off and the grub screw port and wire tail port are sealed with plugs, or the wire is sealed with an O ring.

Figure 2 shows the heat exchanger of Figure 1 when installed through the side opening in a domestic hot water cylinder fitted and in its second folded state.

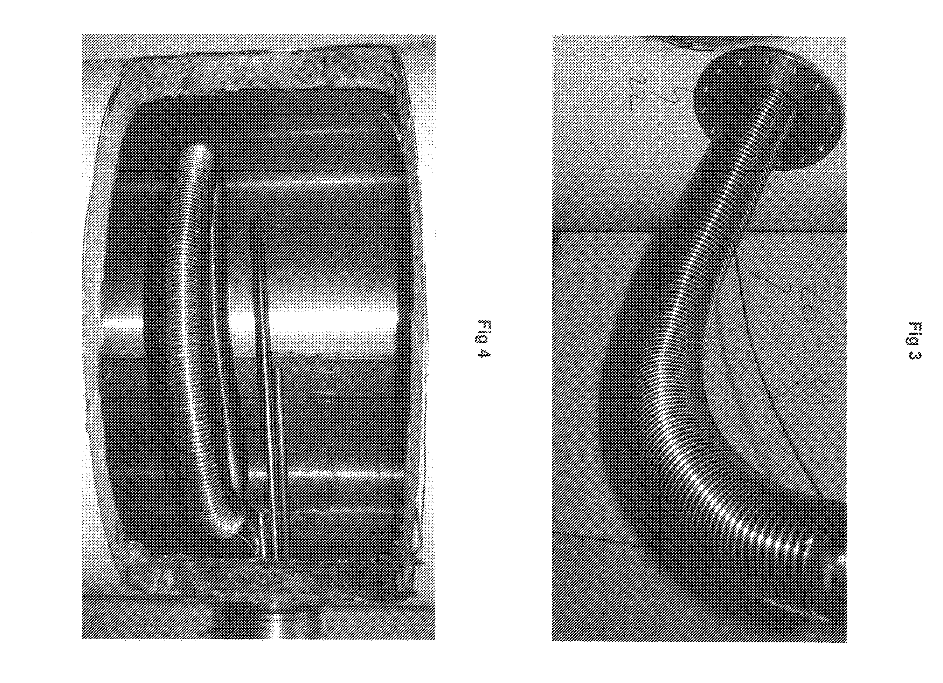

Figure 3 shows a heat exchanger 20 according to the invention attached to a fitting 22 designed to fit into a 1¾" BSP opening in a domestic hot water cylinder. The heat exchanger 20 is substantially all of flexible stainless steel hose. A wire 24 is connected to the end of heat exchanger 20 and passes through an opening in fitting 22.

The heat exchanger 20 is employed in the same manner as for that shown in Figures 1 and 2.

Figure 4 shows the heat exchanger of Figure 3 when installed through the side opening in a domestic hot water cylinder fitted and in its second folded state. The heat exchanger can be seen to be substantially circular in view of it being all of flexible material.

## Claims

1. A heat exchanger comprising pipework suitable for heating water in a domestic hot water cylinder, which has a first elongate state to enable its passage through an opening in the cylinder and is moveable to a second folded state once inside the cylinder.

2. A heat exchanger according to claim 1, wherein the pipework comprises at least a flexible portion in order that it may fold from the first state to the second state.

3. A heat exchanger according to claim 1 or claim 2, which comprises a means for moving the heat exchanger from the first to the second state.

4. A heat exchanger according to claim 3 wherein the means for moving the heat exchanger comprises a wire attached to the heat exchanger.

5. A heat exchanger according to any one of the preceding claims which has a heat transfer surface area in excess of 0.2 m² can fit through an opening of 100 mm diameter and have a length in its second state of no more than 50 cm.

6. A heat exchanger according to claim 5, which can fit through an opening of 60mm.

7. A heat exchanger according to claim 5 or claim 6, which has a heat transfer surface area in excess of 0.4 m².

8. A heat exchanger according to any one of the preceding claims, which comprises a rigid portion forming part of the heat transfer area.

9. A heat exchanger according to claim 8, which comprises a flexible portion foldable against the rigid portion.

10. A heat exchanger according to any one of claims 1 to 7, wherein substantially all of the heat exchanger is flexible.

11. A heat exchanger according to claim 10, wherein the heat exchanger is approximately circular when in its folded state.

12. A heat exchanger according to any one of the preceding claims, which is connected to a solar heating system arrangement, biomass boiler or heat pump.

13. A heat exchanger according to any one of the preceding claims fitted to a side entry opening in a pressurised domestic hot water cylinder.

14. A method of inserting a heat exchanger according to any one of the preceding claims through an opening in a domestic hot water cylinder in its elongate state and then once inside the cylinder, inducing the heat exchanger to move to its folded state.
